# EUROPEAN PATENT SPECIFICATION

(11) **EP 1 998 898 B1**
(45) Date of publication and mention of the grant of the patent: **23.01.2019**
(21) Application number: 06842693.1
(22) Date of filing: 28.12.2006
(51) Int. Cl.: B04C 5/181, B04C 5/13, B04C 5/14

(54) **CYCLONE SEPARATOR**
ZYKLONENABSCHEIDER
SEPARATEUR A CYCLONE

(30) Priority: 24.03.2006 DK 200600416
(43) Date of publication of application: 10.12.2008
(73) Proprietor: FLSmidth A/S, 2500 Valby (DK)
(72) Inventor: HANSEN, Morten Kaare, DK-2630 Taastrup (DK)
(86) International application number: PCT/IB2006/055047
(87) International publication number: WO 2007/110715

(56) References cited:
- EP-A1- 1 350 571
- WO-A1-96/38231
- DD-A1- 251 090
- DE-A1- 1 501 413
- DE-A1- 4 135 171
- US-A- 5 362 379
- US-A- 6 036 028
- US-A1- 2001 005 223

## Description

The present invention relates to a cyclone separator comprising a cyclone housing, a discharge duct and a central tube for diverting gases, said central tube extends axially into the cyclone housing and being composed by a number of segments which are suspended on a supporting element provided in the area between the cyclone housing and the discharge duct.

Cyclone separators are generally known and widely used for many different technical applications in which two phases such as gases and material particles in suspension are to be separated. Cyclones typically comprise a cyclone housing with an upper substantially cylindrical part and a lower conical part, an often tangential inlet in the upper part of the cyclone housing for introducing the suspension which is to be separated, an outlet at the bottom of the conical part for diverting one fraction of the suspension, as well as a central tube extending with a free end axially into the cyclone housing for diverting the second fraction of the suspension via a discharge duct.

From US patent No. 4,505,051 is known an example of a cyclone separator of the aforementioned kind. In this known cyclone separator the upper row of the segments of the central tube comprises an L-shaped part which protrudes outwards and downwards and which rests against a supporting element which is formed with an upwardly projecting part and which is rigidly connected by welding to the cyclone housing/discharge duct. In instances where the cyclone separator is used to separate hot material/gas suspensions, for example in connection with the heating of cement raw materials for cement manufacture, where the temperature may reach a level as high as 900º C, the heat impact on the central tube will be quite significant, leading to changes in the transverse dimensions. It is a particular feature of the known cyclone separator according to US patent 4,505,051 that, in order to prevent serious damage to the central tube, the special suspension of the segments of the central tube on the supporting elements takes due account of the fact that the central tube is affected by such changes of transverse dimensions because of the heat impact. For the known cyclone separator, the heat transmission from the central tube via the supporting element to the cyclone housing/discharge duct will, however, be quite significant due to the relatively large contact surfaces existing between these structural elements. As a consequence of this, a radial temperature gradient may occur in the supporting element ranging from a level around 600ºC at the innermost part of the element to around 200º C at the outermost part of the element. A radial temperature gradient of this magnitude in the supporting element will give rise to significant thermal stress loads which under adverse circumstances may exceed the yield stress limit of the steel used, and involving, in worst-case scenario, a risk the central tube collapsing. Furthermore, a cyclone separator according to the preamble of claim 1 is for example disclosed in DE 15 01 413 A1.

It is the object of the present invention to provide a cyclone separator by means of which the aforementioned disadvantage is significantly reduced.

This is obtained according to the invention by a cyclone separator as defined in claim 1.

Hereby is obtained a significant reduction in the heat transmission from the supporting element to the cyclone housing and/or the discharge duct so that the radial temperature gradient in the supporting element is reduced with an approximately uniform temperature over the radial cross section of the element. Hence the thermal stresses in the supporting element will be substantially reduced. This is mainly ascribable to the reduction in the contact area between the supporting element and the cyclone housing and/or the discharge duct.

The carrying means may be configured in any appropriate manner but for optimization of strength characteristics it is preferred that they are configured as shelf brackets having a substantially triangular shape.

The shelf brackets may be fixed to the cyclone housing and/or the discharge duct in any appropriate manner but it is preferred that they are fixed by welding.

The annular disc which forms the supporting element may be configured with an upwardly protruding flange in order to improve the fixation of the central tube segments which are typically formed with a corresponding downwardly protruding flange. In order to limit the thermal stresses in the upwardly protruding flange of the annular disc, the flange is preferentially divided into a number of segments.

The annular disc may also be provided with a heat-insulating layer on its upper side in order to reduce the heat transmission from the central tube.

It is preferred that the annular disc with its upwardly protruding flange and the shelf brackets are made of heat-resistant steel.

It is further preferred that the cyclone separator is lined in traditional manner.

The invention will now be described in further details with reference to the drawing, where
Fig. 1 shows a partial cut-through view of a cyclone separator comprising a central tube according to a preferred embodiment of the invention, and
Fig. 2 shows details at the cyclone separator shown in Fig. 1.

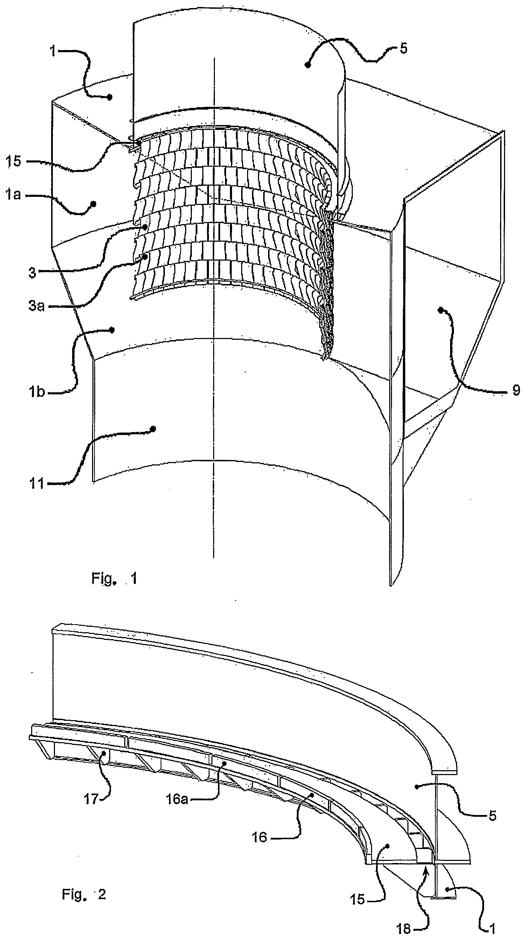

In Fig. 1 and 2 is seen a cyclone separator comprising a cyclone housing 1. The cyclone housing 1 has an upper cylindrical part 1a and a lower conical part 1b, a tangential inlet 9 for introducing the suspension to be separated, an outlet 11 at the bottom of the conical part for diverting one fraction of the suspension, as well as a central tube 3 which extends axially into the cyclone housing 1 for diverting the second fraction of the suspension via a discharge duct 5.

The central tube 3 is made up of a number of segments 3a which are suspended on a supporting element 15 at the upper end of the cyclone housing 1. The supporting element 15 comprises an upwardly protruding flange 16 which, as shown, is divided into segments 16a.

According to the invention the cyclone separator comprises a number of carrying means 17, here shown by way of shelf brackets 17 which are fixed, evenly distributed, to the lowermost part of the inner side of the discharge duct 5. The supporting element in the form of an annular disc 15 is loosely fitted on the shelf brackets 17, allowing the disc to move relative to the shelf brackets 17. The annular disc 15 is formed with an outer diameter which is smaller than the inner diameter of the discharge duct 5 thereby creating a clearance 18 between the annular disc 15 and discharge duct 5.

As mentioned in the introduction the heat transmission from the annular disc 15 via the shelf brackets 17 to the discharge duct 5 will thus be substantially reduced because of the reduction in the contact area so that the annular disc 15 has an approximately uniform temperature across its radial cross-section, hence being subjected to substantially reduced thermal stresses.

## Claims

1. A cyclone separator comprising a cyclone housing (1), a discharge duct (5) and a central tube (3) for diverting gases, said central tube (3) extending axially into the cyclone housing (1) and being composed by a number of segments (3a) which are suspended on a supporting element (15) provided in the area between the cyclone housing (1) and the discharge duct (5), wherein it comprises a number of carrying means (17) which are evenly distributed and fixed to the cyclone housing (1) and/or the discharge duct (5), **characterized in that** said carrying means (17) are fixed to the inner side and protrude inwardly and **in that** the supporting element (15) comprises an annular disc which is loosely fitted on top of the carrying means (17) and having an outer diameter which is smaller than the inner diameter of the cyclone housing (1) and/or the discharge duct (5) so that a clearance (18) is provided between the annular disc (15) and the cyclone housing (1) and/or the discharge duct (5).

2. Cyclone separator according to claim 1, **characterized in that** the carrying means (17) are configured as shelf brackets having a substantially triangular shape.

3. Cyclone separator according to claim 2, **characterized in that** the carrying means (17) are fixed to the cyclone housing (1) and/or the discharge duct (5) by welding.

4. Cyclone separator according to claim 1, **characterized in that** the annular disc (15) is configured with an upwardly protruding flange (16).

5. Cyclone separator according to claim 4, **characterized in that** the upwardly protruding flange (16) of the annular disc (15) is divided into a number of segments (16a).

6. Cyclone separator according to claim 4, **characterized in that** the annular disc (15) is provided with a heat-insulating layer on its upper side.

7. Cyclone separator according to claim 4, **characterized in that** the annular disc (15) with its upwardly protruding flange (16) and the shelf brackets (17) are made of heat-resistant steel.

8. Cyclone separator according to any of the preceding claims, **characterized in that** the cyclone separator is lined.

## Patentansprüche

1. Zyklonabscheider umfassend ein Zyklongehäuse (1), einen Abgabekanal (5) und ein zentrales Rohr (3) zum Umlenken von Gasen, wobei sich das zentrale Rohr (3) axial in das Zyklongehäuse (1) erstreckt und aus einer Anzahl von Segmenten (3a) zusammengesetzt ist, die an einem stützenden Element (15) aufgehängt sind, das in dem Bereich zwischen dem Zyklongehäuse (1) und dem Abgabekanal (5) vorgesehen ist, wobei er eine Anzahl von tragenden Mitteln (17) umfasst, die gleichmäßig verteilt und an dem Zyklongehäuse (1) und/oder dem Abgabekanal (5) fixiert sind, **dadurch gekennzeichnet, dass** die tragenden Mittel (17) an der Innenseite fixiert sind und nach innen vorstehen, und dass das stützende Element (15) eine ringförmige Scheibe umfasst, die lose oben auf die tragenden Mittel (17) gepasst ist und einen Außendurchmesser aufweist, der kleiner als der Innendurchmesser des Zyklongehäuses (1) und/oder des Abgabekanals (5) ist, so dass zwischen der ringförmigen Scheibe (15) und dem Zyklongehäuse (1) und/oder dem Abgabekanal (5) ein Freiraum (18) vorgesehen ist.

2. Zyklonabscheider nach Anspruch 1, **dadurch gekennzeichnet, dass** die tragenden Mittel (17) als Regalhalterungen konfiguriert sind, die eine im Wesentlichen dreieckige Form aufweisen.

3. Zyklonabscheider nach Anspruch 2, **dadurch gekennzeichnet, dass** die tragenden Mittel (17) an dem Zyklongehäuse (1) und/oder dem Abgabekanal (5) durch Schweißen fixiert sind.

4. Zyklonabscheider nach Anspruch 1, **dadurch gekennzeichnet, dass** die ringförmige Scheibe (15) mit einem nach oben vorstehenden Flansch (16) konfiguriert ist.

5. Zyklonabscheider nach Anspruch 4, **dadurch gekennzeichnet, dass** der nach oben vorstehende Flansch (16) der ringförmigen Scheibe (15) in eine Anzahl von Segmenten (16a) geteilt ist.

6. Zyklonabscheider nach Anspruch 4, **dadurch gekennzeichnet, dass** die ringförmige Scheibe (15) mit einer wärmeisolierenden Schicht an ihrer Oberseite versehen ist.

7. Zyklonabscheider nach Anspruch 4, **dadurch gekennzeichnet, dass** die ringförmige Scheibe (15) mit ihrem nach oben vorstehenden Flansch (16) und die Regalhalterungen (17) aus hitzebeständigem Stahl sind.

8. Zyklonabscheider nach einem der vorhergehenden Ansprüche, **dadurch gekennzeichnet, dass** der Zyklonabscheider ausgekleidet ist.

## Revendications

1. Séparateur de cyclone comprenant un logement de cyclone (1), un conduit d'évacuation (5) et un tube central (3) pour dévier des gaz, ledit tube central (3) s'étend axialement à l'intérieur du logement de cyclone (1) et est composé d'un certain nombre de segments (3a) qui sont suspendus sur un élément de support (15) prévu dans la zone entre le logement de cyclone (1) et le conduit d'évacuation (5), dans lequel il comprend un certain nombre de moyens de support (17) qui sont répartis de manière régulière et fixés au logement de cyclone (1) et/ou au conduit d'évacuation (5), **caractérisé en ce que** lesdits moyens de support (17) sont fixés au côté interne et font saillie vers l'intérieur et **en ce que** l'élément de support (15) comprend un disque annulaire qui est ajusté de manière lâche au-dessus des moyens de support (17) et a un diamètre externe qui est inférieur au diamètre interne du logement de cyclone (1) et/ou du conduit d'évacuation (5) de telle sorte qu'un espace (18) est prévu entre le disque annulaire (15) et le logement de cyclone (1) et/ou le conduit d'évacuation (5).

2. Séparateur de cyclone selon la revendication 1, **caractérisé en ce que** les moyens de support (17) sont configurés en tant que supports d'étagère ayant une forme sensiblement triangulaire.

3. Séparateur de cyclone selon la revendication 2, **caractérisé en ce que** les moyens de support (17) sont fixés au logement de cyclone (1) et/ou au conduit d'évacuation (5) par soudure.

4. Séparateur de cyclone selon la revendication 1, **caractérisé en ce que** le disque annulaire (15) est configuré avec une bride (16) faisant saillie vers le haut.

5. Séparateur de cyclone selon la revendication 4, **caractérisé en ce que** la bride (16) faisant saillie vers le haut du disque annulaire (15) est divisée en un certain nombre de segments (16a).

6. Séparateur de cyclone selon la revendication 4, **caractérisé en ce que** le disque annulaire (15) est pourvu d'une couche thermo-isolante sur son côté supérieur.

7. Séparateur de cyclone selon la revendication 4, **caractérisé en ce que** le disque annulaire (15) avec sa bride (16) faisant saillie vers le haut et les supports d'étagère (17) sont réalisés à partir d'un acier résistant à la chaleur.

8. Séparateur de cyclone selon l'une quelconque des revendications précédentes, **caractérisé en ce que** le séparateur de cyclone dispose d'un revêtement.
